# EUROPEAN PATENT APPLICATION

(11) **EP 2 065 185 A1**
(43) Date of publication of application: **03.06.2009**
(21) Application number: 07828299.3
(22) Date of filing: 21.09.2007
(51) Int. Cl.: B32B 27/36, C08J 5/18, C08K 5/103, C08L 67/02

(54) **ADHESIVE WRAP FILM**

(30) Priority: 21.09.2006 JP 2006255558
(71) Applicant: Asahi Kasei Home Products Corporation, Tokyo 101-8101 (JP)
(72) Inventor: SAKAMOTO, Yuichiro, Tokyo 100-8440 (JP); ISHIKAWA, Koji, Tokyo 100-8440 (JP)
(74) Representative: Bradley, Josephine Mary
(86) International application number: PCT/JP2007/068379
(87) International publication number: WO 2008/035761

(57) **Abstract**

Disclosed is a wrap film comprising, as at least one surface layer, a resin composition (D) layer containing 0.5-5 parts by weight of an ethylene-vinyl acetate copolymer (B) having a vinyl acetate content of 30-60% by weight and 5-40 parts by weight of a liquid additive (C) per 100 parts by weight of an aliphatic polyester resin (A).

## Description

### Technical Field

The present invention relates to a film for wrapping an article or the like, for example, for wrapping food at home or the like, or a film used in a wrap for wrapping food. Particularly, the present invention relates to a biodegradable wrapping film which combines clinging property and pulling-out property, is excellent in flexibility, transparency and touch feeling and maintains high clinging property under a low temperature environment.

### Background Art

Thin films of thermoplastic resins have conventionally been used when food is required to be preserved or heated in a microwave oven in a food-related business such as a restaurant or a foodstuff store and in an ordinary household. Among others, wrapping films of vinylidene chloride copolymer resins for wrapping food are frequently used. In addition, non-chlorine type wrapping films for wrapping food composed each of a resin other than vinylidene chloride copolymer resins have been proposed in recent years, and polyethylene and polypropylene wrapping films have also been developed and are on the market.

Through a recent increased awareness about environmental protection, attention has been given to problems with refuse and waste, and products having biodegradability have been developed. Films featuring biodegradability have also been proposed in the field of a wrapping film; wrapping films mainly containing aliphatic polyesters such as polylactic acid have been developed. One of the essential performances for a wrapping film is clinging property to a container and the like. In previously proposed wrapping films, the type and amount of additives have been controlled based on the aliphatic polyesters forming base materials to improve the clinging property. However, some of these films for which measures have been taken to improve clinging property are poor in usability when used by consumers because they do not take into consideration pulling-out property when the films are each pulled out from the state of a roll. A wrapping film is also used for preserving food in a refrigerator when employed at home or the like. Thus, the film requires clinging property to a container under a low temperature environment and clinging property of the film to itself as the performances thereof; however, a wrapping film for which consideration is given to this point has not been developed.

Patent Documents 1 and 2 describe that stretched films of compositions composed of aliphatic polyester resins and liquid additives can be used as wrapping films. However, clinging property moderate for the wrapping films is exerted by the wettability of the film surface due to the bleeding-out of the liquid additives; therefore, clinging property of each film to itself and to a container is markedly reduced when dew condensation is generated on a surface of the container and the film under a low temperature environment. Thus, these films are unsuitable as wrapping films for preserving food in a refrigerator or the like because consideration is not given to clinging property under a low temperature environment.
In addition, Patent Document 3 has proposed a wrapping film in which a tackifier is added to an aliphatic polyester such as polylactic acid forming a base material to impart desired clinging property. However, even for the wrapping film obtained by the method, clinging property of the film to itself and to a container is remarkably reduced when dew condensation occurs on a surface of the container and the film under a low temperature environment because the clinging property thereof to itself and to the container is not strong. Thus, this film is unsuitable as a wrapping film for preserving food in a refrigerator or the like because consideration is not given to clinging property under a low temperature environment.
Patent Document 4 describes a method comprising blending an ethylene-vinyl acetate copolymer for the purpose of improving the flexibility of polylactic acid. However, the film obtained by this method generates the tangle of the film to itself because it has excessively high clinging property, and is unsuitable as a wrapping film.

When these conventional technologies are summarized, a wrapping film has not yet been obtained which sufficiently satisfies clinging property and pulling-out property as a biodegradable wrapping film and simultaneously maintains clinging property under a low temperature environment.
Patent Document 1 JP-A-2000-026623
Patent Document 2 JP-A-2000-302956
Patent Document 3 JP-A-2000-185381
Patent Document 4 JP-A-09-151310

### Disclosure of Invention

### Problem to be solved by the Invention

An object of the present invention is to provide a biodegradable wrapping film for household use, **characterized in that** it combines clinging property and pulling-out property, is excellent in flexibility, transparency and touch feeling and simultaneously has high clinging property under a low temperature environment.

### Means for Solving the Problem

As a result of intensive studies for solving the above problems in conventional technologies, the present inventors have accomplished the present invention.
Specifically, the present invention is as follows.
(1) A wrapping film comprising, as at least one surface layer, a resin composition (D) layer comprising 0.5 to 5 parts by weight of an ethylene-vinyl acetate copolymer having a vinyl acetate content of 30 to 60% by weight (B) and 5 to 40 parts by weight of a liquid additive (C) per 100 parts by weight of an aliphatic polyester resin (A).
(2) The wrapping film described in item (1), wherein the film has cling energy of 0.5 to 2.5 mJ as determined at 23°C.
(3) The wrapping film described in item (1) or (2), wherein the film has a pulling-out force of 5 to 100 cN when pulled out from a roll as determined at 23°C.
(4) The wrapping film described in item (1) or (2), wherein the aliphatic polyester resin (A) is a crystalline polylactic acid resin.
(5) The wrapping film described in item (1) or (2), wherein the liquid additive (C) comprises 90% by weight or more of a glycerin fatty acid ester.
(6) The wrapping film described in item (1) or (2), wherein the glycerin fatty acid ester is an acetylated monoglyceride.
(7) The wrapping film described in item (3), wherein the aliphatic polyester resin (A) is a crystalline polylactic acid resin.
(8) The wrapping film described in item (3), wherein the liquid additive (C) comprises 90% by weight or more of a glycerin fatty acid ester.
(9) The wrapping film described in item (3), wherein the glycerin fatty acid ester is an acetylated monoglyceride.

### Advantages of the Invention

The wrapping film of the present invention has the advantages of simultaneously satisfying the flexibility, transparency and touch feeling and further both clinging property and pulling-out property required as wrapping film characteristics and, at the same time, maintaining high clinging property under a low temperature environment by the combination of a particular ethylene-vinyl acetate copolymer and a liquid additive with an aliphatic polyester.

### Best Mode for Carrying Out the Invention

The present invention is specifically described below.
The greatest difference between the present invention and the conventional technologies is as follows. In each conventional technology, wrapping film performances have been satisfied, for example, by adding a liquid additive or the like to an aliphatic polyester such as polylactic acid. In contrast, in the present invention, the composition of the film has been devised by adding adequate amounts of a liquid additive and a particular ethylene-vinyl acetate copolymer to an aliphatic polyester such as polylactic acid so that the wrapping film performances are satisfied while higher clinging property is maintained under a low temperature environment in a refrigerator or the like than that for the conventional technologies.
The effect based on the structural requirements differing from those of the conventional technologies is that the exhibition of clinging property with the conventional technologies is contributed by the wettability of the film surface due to the bleeding-out of the liquid additives, while the wrapping film of the present invention exhibits strong clinging property due to the tackiness of ethylene-vinyl acetate. Thus, the conventional technologies markedly reduce clinging property of the film to itself and to a container when dew condensation is generated on a surface of the container and the film under a low temperature environment. In contrast, the wrapping film of the present invention has strong clinging property thereof to itself and to a container and has the effect of maintaining the clinging property even when the dew condensation occurs because water cannot be present in the interface.
The film of the present invention comprises a resin composition (D) layer comprising 0.5 to 5 parts by weight of an ethylene-vinyl acetate copolymer having a vinyl acetate content of 30 to 60% by weight (B) and 5 to 40 parts by weight of a liquid additive (C) per 100 parts by weight of an aliphatic polyester resin (A).

Examples of the aliphatic polyester resin (A) used in the present invention include a polymer obtained by polymerizing at least one hydroxycarboxylic acid such as lactic acid, glycolic acid, 3-hydroxybutyric acid, 2-hydroxy-2,2-dialkylacetic acids including 2-hydroxyisobutyric acid, 3-hydroxyvaleric acid, 4-hydroxybutanoic acid and 3-hydroxyhexanoic acid, and a copolymer thereof with another monomer. The polymerization method, copolymerization ratio, structure and the like are not particularly limited. These polymers may also be used by blending two or more thereof in the range not departing from the scope of the present invention. The aliphatic polyester resin is preferably a lactic acid-based aliphatic polyester resin such as polylactic acid resin, which is a polymer of lactic acid, particularly preferably one containing 90% by weight or more of the polylactic acid resin based on the whole aliphatic polyester resin in terms of heat resistance and transparency.

L- and D-isomers are present in the monomer lactic acid to be polymerized; the polylactic acid used in the present invention may be a poly-L-lactic acid, a poly-D-lactic acid, or a poly-DL-lactic acid. In terms of securing heat resistance for a wrapping film, a crystalline polylactic acid is preferably used; for example, the content of the D-isomer in a polymer having a high proportion of the L-isomer is more preferably 8% by weight or less.
The ethylene-vinyl acetate copolymer (B) used in the present invention has a vinyl acetate content of 300 to 60% by weight, preferably 40 to 50% by weight.
A vinyl acetate content of less than 30% by weight impairs the transparency because it reduces the compatibility with the aliphatic polyester. In addition, clinging property for a wrapping film cannot be sufficiently obtained. A vinyl acetate content of more than 60% by weight maintains the transparency, but excessively enhances the clinging property and causes the tangle of the film to itself and deteriorated pulling-out property, which does not result in a film having satisfactory usability as a wrapping film. Examples of commercial ethylene-vinyl acetate copolymer include EVAFLEX EV45LX and EV40LX (from Du Pont-Mitsui Polychemicals Co., Ltd.).

According to the present invention, the ethylene-vinyl acetate copolymer (B) is preferably added in an amount of 0.5 to 5 parts by weight per 100 parts by weight of the aliphatic polyester resin (A). The addition amount is more preferably 1 to 4 parts by weight. The amount of less than 0.5 part by weight does not make the clinging property sufficient. Conversely, the amount of more than 5 parts by weight is not preferable because it excessively enhances the clinging property and causes the tangle of the film to the same and deteriorated pulling-out property.

The liquid additive (C) used in the present invention is employed for the purpose of improving the flexibility and clinging property of the film and controlling the pulling-out property thereof. The liquid additive (c) refers to an additive whose liquefaction temperature is 45°C or lower. The additive may be properly selected from known additives as far as the object of the invention is not impaired. In considering food wrapping applications, the additive is preferably, for example, a food additive such as glycerin fatty acid ester and polybutene, or an additive agent like an indirect food additive approved to contact food, such as epoxidized plant oil and acetylated citric acid fatty acid ester. These additives may be used alone or in a mixture of two or more thereof within the range not departing from the object of the present invention.

Among the liquid additives (C), particularly preferred is a glycerin fatty acid ester in terms of the clinging property and pulling-out property of the wrapping film. The glycerin fatty acid ester is not particularly limited; however, examples thereof include a polyglycerin fatty acid ester such as diglycerin, triglycerin and tetraglycerin fatty acid esters in addition to a monoglyceride, a diglyceride, a triglyceride and an acetylated monoglyceride. Among others, the acetylated monoglyceride is particularly preferably used in view of the good compatibility with the aliphatic polyester resin and the high plasticizability.

The acetylated monoglyceride has a molecular structure represented by formula (I) below.

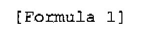

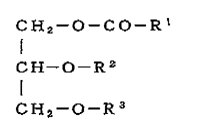

In the above formula (I), R¹ represents an alkyl group, and R² and R³ each represent an acetyl group or hydrogen. The carbon number of the alkyl group is not particularly limited, and is properly selected depending on the properties of the aliphatic polyester resin so that the purpose of improving the clinging property and flexibility is achieved. However, the carbon number is preferably 6 to 20.

The liquid additive (C) preferably comprises the glycerin fatty acid ester in an amount of 70% by weight or more, more preferably 90% by weight or more in terms of the compatibility with the aliphatic polyester resin and the transparency of the wrapping film.

In the resin composition (D), the content of the liquid additive (C) is 5 to 40 parts by weight, more preferably 10 to 30 parts by weight per 100 parts by weight of the aliphatic polyester resin (A). A content of less than 5 parts by weight makes the flexibility and clinging property insufficient; more than 40 parts by weight is not preferable because it generates the stickiness of the film due to bleeding-out.

The present invention is a film in which the resin composition (D) layer is disposed as at least one of the surface layers. Thus, the film of the present invention encompasses a monolayer film comprising only the (D) layer and a multilayer film comprising the (D) layer and a different layer(s).

For the multilayer film, the (D) layer may be used for both or only one of the surface layers. The layer composition may be symmetrical or unsymmetrical. Here, the proportion of the (D) layer is preferably 20% or more based on the thickness of the whole film in terms of the flexibility and clinging property of the film. The different layer used in combination with the (D) layer may be of at least one selected from aliphatic polyester resins, an ethylene-vinyl acetate copolymer, aromatic aliphatic polyester resins, polyamide resins, polyolefin resins, an ethylene-vinyl alcohol copolymer, and the like; however, it preferably consists mainly of the aliphatic polyester resin. The above liquid additive (C) and a known additive may be blended in these resins.

According to the present invention, cling energy is used as an index for the clinging property of the wrapping film. The cling energy is an index for evaluating the clinging property of the wrapping film to itself or to a container when the container or food is covered with the film. The cling energy is determined by the energy when the film is peeled away from the same one adhered thereto, and is measured by a method to be described. The cling energy is preferably 0.5 to 2.5 mJ, more preferably 1.0 to 2.0 mJ in view of moderate clinging property.

According to the present invention, the pulling-out force is used as an index for pulling-out property when the wrapping film is pulled out from the state of a roll. The pulling-out force is used to evaluate ease of pulling out when the film is pulled out. The pulling-out force is measured by a method to be described. The pulling-out force is preferably 5 to 100 cN, more preferably 5 to 50 cN in view of good pulling-out property.

A known film-molding method may be used as the method for producing the film. The film can be molded by a conventional known method such as monoaxial or biaxial stretching by a roll method or a tenter method and multiaxial stretching by a tubular method. The film is preferably stretched by stretch ratio of 2 or more in longitudinal and/or transverse direction from a standpoint of film strength and cutting ability of wrapping film. For successive biaxial stretching, each stretch ratio in the longitudinal and transverse directions may not be the same. The stretching temperature is preferably the glass transition temperature of the resin composition (D) or higher and lower than the crystallization peak temperature observed during the temperature rise in DSC measurement. This temperature range can prevent the surface roughening and deteriorated surface roughness following stretching at insufficient temperatures, and the breaking and the worsened releasability between the stretching roll and the film accompanying stretching at too high temperatures. The biaxially stretched film may also be heat-treated for the purpose of the dimensional stability of the film. The heat treatment is preferably carried out by heating for 3 to 15 seconds in the temperature range of 30°C lower than the melting point of the resin composition (D). It is preferable to heat the film in such conditions because the oriented crystallization generated during the stretching step is promoted to some extent. The heating can not only make the dimensional stability of the film but also suppress changes with time in the clinging property and pulling-out property required for a wrapping film.

The resultant film is made into an article through steps according to the form of the intended article, including trimming the edge, cutting into a desired size or winding around a paper core and the like. The film of the present invention is excellent in the balance between clinging property and pulling-out property and useful as a wrapping film having good usability. In addition, the film combines characteristics excellent as a wrapping film, such as flexibility, transparency and touch feeling.

### Examples

Examples and Comparative Examples of the present invention are described below. In addition, measurement and evaluation items are given in the following. The compositions and evaluation results in Examples and Comparative Examples are shown in Tables 1 and 2.
(1) Cling energy: The cling energy is measured by the following method. First, two cylindrical measurement tools with base areas of 25 cm², each having a filter paper adhered to the entire bottom face, are provided. A film is put on each bottom face so that it does not wrinkle, and is fixed under tension. Then, the cylindrical measurement tools are joined vertically so that the film surfaces touch each other; a load is applied to the film touch side by placing 500 g of a weight on the upper tool for one minute. Subsequently, the weight is removed gently, and the films are peeled in the direction vertical to the touch side at a tensile rate of 5 mm/min. using a tensile machine. The energy here generated is defined as cling energy. The measurement is carried out under the constant temperature and humidity of 23°C and 50%. The measurement is performed 10 times; the mean value is adopted. Cling energy of 0.7 mJ to 2.2 mJ (inclusive) was determined as ⊚; 0.5 mJ inclusive to less than 0.7 mJ or more than 2.2 mJ to 2.5 mJ inclusive, as ○; and less than 0.5 mJ or more than 2.5 mJ, as ×.

(2) Pulling-out force: The pulling-out force is determined by the following measurement method. A wrapping film wound around a paper core, adjusted to a film width of 30 cm, is set in a roll-form tool easily rotated with a minimal force; the end of the film is fixed on a 330-mm wide tool directly connected to a load cell in the tensile machine. Then, the film is pulled out at a rate of 1,000 mm/min. The mean value of the stress here generated is defined as a pulling-out force. The measurement is carried out under the constant temperature and humidity of 23°C and 50%. The measurement is performed 10 times; the mean value is adopted. A pulling-out force of 5 cN to 80 cN (inclusive) was determined as ⊚; more than 80 cN to 100 cN inclusive, as ○; and the other range, as ×.

(3) Transparency: The haze of the resultant film is measured using NDH-300A (from Nippon Denshoku Industries Co., Ltd.) according to the method described in ASTM-D-103. A measured value of less than 1.0 was determined as ⊚; 1.0 inclusive to less than 2.5, as ○; and 2.5 or more, as ×.
(4) Tensile modulus: The tensile modulus is measured by a method according to ASTM-D-882. The tensile modulus at a strain of 2% in the longitudinal (MD) and transverse (TD) directions of the film are measured using a tensile machine. A mean value in both longitudinal and transverse directions of 400 MPa inclusive to less than 1,000 MPa was determined as ⊚; 200 MPa inclusive to less than 400 MPa or 1,000 MPa inclusive to less than 1,500 MPa, as ○; and the other range, as ×.
(5) Low temperature clinging property: The low temperature clinging property was evaluated by the following method. A glass cup was covered with the wrapping film, which was then allowed to stand in a refrigerator (5°C) for 2 hours, followed by judging the clinging property to the cup on the basis of the following criteria. Complete clinging property of the film to the cup was determined as ⊚, and peeling-off of even part of the film from the cup, as ×.

### (Example 1)

A mixture of 2 parts by weight of EVAFLEX EV45LX (trade name) (from Du Pont-Mitsui Polychemicals Co., Ltd.) as an ethylene-vinyl acetate copolymer (B) with 100 parts by weight of LACEA H-440 (trade name) (from Mitsui Chemicals, Inc.) as an aliphatic polyester resin (A) was melt-kneaded using a twin screw extruder. EVAFLEX EV45LX has a vinyl acetate content of 46% by weight. LACEA H-440 is a copolymer of L- and D-isomers of lactic acid monomer and is a crystalline polylactic acid resin having a D-isomer content of 4% by weight (melting point: about 150°C). In the melt-kneading, 20 parts by weight of RIKEMAL PL019 from Riken Vitamin Co., Ltd. (trade name, acetylated monoglyceride) was injected as a liquid additive (C) through a liquid injection section installed in a cylinder of the extruder using a quantitative liquid feed pump. The twin screw extruder extruding a resultant resin composition (D) was used for both surface layers of a multilayer film. In another twin screw extruder for the internal layer in parallel with the above extruder was added 20 parts by weight of RIKEMAL PL019 (from Riken Vitamin Co., Ltd.) (trade name, acetylated monoglyceride) to 100 parts by weight of LACEA H-440 (trade name) (from Mitsui Chemicals, Inc.), a crystalline polylactic acid resin having a D-isomer content of 4% by weight (melting point: about 150°C). After melt-kneading, the molten compositions from both extruders were laminated using a layer formation component and extruded from a T-die. Here, the thickness ratio of the layers was set to 2/6/2. The sheet obtained by the melt extrusion was conducted onto a casting roll for cooling and then introduced into a roll-type longitudinal stretching machine to stretch the sheet by stretch ratio of 2.5 in the longitudinal direction at 30°C. The resultant longitudinally stretched sheet was introduced into a tenter-type transverse stretching machine, stretched by stretch ratio of 5.5 in the transverse direction at 45°C and then heat-treated at 125°C for 4 seconds in the tenter to provide a 9-µm thick film. The wrapping film was evaluated for the cling energy, pulling-out force, transparency, tensile modulus and low temperature clinging property. Good results were obtained as shown in Table 1.

### (Example 2)

A 9-µm thick film was obtained in the same way as in Example 1 except that the ethylene-vinyl acetate copolymer (B) in the resin composition (D) was increased to 5 parts by weight of EVAFLEX EV45LX having a vinyl acetate content of 46% by weight. This wrapping film was evaluated for the cling energy, pulling-out force, transparency, tensile modulus and low temperature clinging property. Good results were obtained as shown in Table 1.

### (Example 3)

A 9-µm thick film was obtained in the same way as in Example 1 except that the ethylene-vinyl acetate copolymer (B) in the resin composition (D) was increased to 3 parts by weight of EVAFLEX EV45LX having a vinyl acetate content of 46% by weight followed by addition of 2 parts by weight of NEWSIZER 510R from NOF Corporation (trade name, epoxidized soy bean oil) as a liquid additive (C). This wrapping film was evaluated for the cling energy, pulling-out force, transparency, tensile modulus and low temperature clinging property. Good results were obtained as shown in Table 1.

### (Example 4)

A 9-µm thick film was obtained in the same way as in Example 1 except that 10 parts by weight of EVAFLEX EV45LX having a vinyl acetate content of 46% by weight was added to the composition of the internal layer in Example 3. This wrapping film was evaluated for the cling energy, pulling-out force, transparency, tensile modulus and low temperature clinging property. Good results were obtained as shown in Table 1.

### (Example 5)

A 9-µm thick film was obtained in the same way as in Example 1 except that the ethylene-vinyl acetate copolymer (B) in the resin composition (D) of Example 4 was changed to 3 parts by weight of EVAFLEX EV40LX (trade name) (from Du Pont-Mitsui Polychemicals Co., Ltd.) having a vinyl acetate content of 41% by weight. This wrapping film was evaluated for the cling energy, pulling-out force, transparency, tensile modulus and low temperature clinging property. Good results were obtained as shown in Table 1.

### (Example 6)

A 9-µm thick film was obtained in the same way as in Example 1 except that the ethylene-vinyl acetate copolymer (B) in the resin composition (D) of Example 4 was changed to 3 parts by weight of EVAFLEX EV170 (trade name) (from Du Pont-Mitsui Polychemicals Co., Ltd.) having a vinyl acetate content of 33% by weight. This wrapping film was evaluated for the cling energy, pulling-out force, transparency, tensile modulus and low temperature clinging property. Good results were obtained as shown in Table 1.

### (Example 7)

A 9-µm thick film was obtained in the same way as in Example 1 except that the ethylene-vinyl acetate copolymer (B) in the resin composition (D) of Example 4 was changed to 1 part by weight of SOARBLEN CH (trade name) (from Nippon Synthetic Chemical Industry Co., Ltd.) having a vinyl acetate content of 60% by weight. This wrapping film was evaluated for the cling energy, pulling-out force, transparency, tensile modulus and low temperature clinging property. Good results were obtained as shown in Table 1.

### (Comparative Example 1)

A 9-µm thick film was obtained in the same way as in Example 1 except that 0 part by weight of EVAFLEX EV45LX having a vinyl acetate content of 46% by weight was added as ethylene-vinyl acetate copolymer (B) in the resin composition (D) of Example 1. This wrapping film was evaluated for the cling energy, pulling-out force, transparency, tensile modulus and low temperature clinging property. No satisfactory performances as a wrapping film were obtained as shown in Table 2.

### (Comparative Example 2)

A 9-µm thick film was obtained in the same way as in Example 1 except that 4 parts by weight of RIKEMAL PL019 as liquid additive (C) was added into the resin composition (D) of Example 1. This wrapping film was evaluated for the cling energy, pulling-out force, transparency, tensile modulus and low temperature clinging property. No satisfactory performances as a wrapping film were obtained as shown in Table 2.

### (Comparative Example 3)

A 9-µm thick film was obtained in the same way as in Example 1 except that the ethylene-vinyl acetate copolymer (B) in the resin composition (D) of Example 1 was changed to 3 parts by weight of EVAFLEX EV360 (trade name) (from Du Pont-Mitsui Polychemicals Co., Ltd.) having a vinyl acetate content of 25% by weight. This wrapping film was evaluated for the cling energy, pulling-out force, transparency, tensile modulus and low temperature clinging property. No satisfactory performances as a wrapping film were obtained as shown in Table 2.

### (Comparative Example 4)

A 9-µm thick film was obtained in the same way as in Example 1 except that the ethylene-vinyl acetate copolymer (B) in the resin composition (D) of Example 1 was changed to 5 parts by weight of SOARBLEN DH (trade name) (from Nippon Synthetic Chemical Industry Co., Ltd.) having a vinyl acetate content of 70% by weight. This wrapping film was evaluated for the cling energy, pulling-out force, transparency, tensile modulus and low temperature clinging property. No satisfactory performances as a wrapping film were obtained as shown in Table 2.

### (Comparative Example 5)

A 9-µm thick film was obtained in the same way as in Example 1 except that EVAFLEX EV45LX having a vinyl acetate content of 46% by weight was increased to 7 parts by weight as ethylene-vinyl acetate copolymer (B) in the resin composition (D) of Example 1. This wrapping film was evaluated for the cling energy, pulling-out force, transparency, tensile modulus and low temperature clinging property. No satisfactory performances as a wrapping film were obtained as shown in Table 2.

**Table 1**

| | | | Example 1 | Example 2 | Example 3 | Example 4 | Example5 | Example 6 | Example 7 |
|---|---|---|---|---|---|---|---|---|---|
| Surface Layer Resin Composition (D) | Aliphatic Polyester (A) | LACEA H-440 | 100 | 100 | 100 | 100 | 100 | 100 | 100 |
| | Ethylene-Vinyl Acetate Copolymer (B) | EVAFLEX EV45LX | 2 | 5 | 3 | 3 | | | |
| | | EVAFLEX EV40LX | | | | | 3 | | |
| | | SOARBLEN CH | | | | | | | 1 |
| | | EVAFLEX EV170 | | | | | | 3 | |
| | | EVAFLEX EV360 | | | | | | | |
| | | SOARBLEN DH | | | | | | | |
| | Liquid Additive (C) | RIKEMAL PL019 | 20 | 20 | 20 | 20 | 20 | 20 | 20 |
| | | NEWSIZER 510R | | | 2 | 2 | 2 | 2 | 2 |
| Internal Layer Resin Composition | Resin | LACEA H-440 | 100 | 100 | 100 | 100 | 100 | 100 | 100 |
| | | EVAFLEX EV45LX | | | | 10 | 10 | 10 | 10 |
| | Additive | RIKEMAL PL019 | 20 | 20 | 20 | 20 | 20 | 20 | 20 |
| Cling Energy | | | ○ | ⊚ | ⊚ | ⊚ | ⊚ | ○ | ⊚ |
| Pulling-out force | | | ⊚ | ○ | ⊚ | ⊚ | ⊚ | ⊚ | ○ |
| Transparency | | | ⊚ | ⊚ | ⊚ | ⊚ | ⊚ | ⊚ | ○ |
| Tensile Modulus | | | ○ | ○ | ○ | ⊚ | ⊚ | ○ | ○ |
| Low Temperature Clinging property | | | ⊚ | ⊚ | ⊚ | ⊚ | ⊚ | ⊚ | ⊚ |

**Table 2**

| | | | Comparative Example 1 | Comparative Example 2 | Comparative Example 3 | Comparative Example 4 | Comparative Example 5 |
|---|---|---|---|---|---|---|---|
| Surface Layer Resin Composition (D) | Aliphatic Polyester (A) | LACEA H-440 | 100 | 100 | 100 | 100 | 100 |
| | Ethylene-Vinyl Acetate copolymer (B) | EVAFLEX EV45LX | | 2 | | | 7 |
| | | EVAFLEX EV40LX | | | | | |
| | | SOARBLEN CH | | | | | |
| | | EVAFLEX EV170 | | | | | |
| | | EVAFLEX EV360 | | | 3 | | |
| | | SOARBLEN DH | | | | 5 | |
| | Liquid Additive (C) | RIKEMAL PL019 | 20 | 4 | 20 | 20 | 20 |
| | | NEWSIZER 510R | | | | | |
| Internal Layer Resin Composition | Resin | LACEA H-440 | 100 | 100 | 100 | 100 | 100 |
| | Additive | RIKEMAL PL019 | 20 | 20 | 20 | 20 | 20 |
| Cling Energy | | | ○ | × | × | ○ | × |
| Pulling-out force | | | ⊚ | ⊚ | ⊚ | × | × |
| Transparency | | | ⊚ | ⊚ | ⊚ | ⊚ | ⊚ |
| Tensile Modulus | | | ○ | × | ○ | ○ | ○ |
| Low Temperature Clinging property | | | × | × | × | ⊚ | ⊚ |

### Industrial Applicability

The present invention can be used in a film for wrapping an article or the like, for example, for ping food at home or the like, or a film used in a wrap for wrapping food. Particularly, the present invention can be used in a biodegradable film which combines clinging property and pulling-out property, is excellent in flexibility, transparency and touch feeling and maintains high clinging property under a low temperature environment.

## Claims

1. A wrapping film comprising, as at least one surface layer, a resin composition (D) layer comprising 0.5 to 5 parts by weight of an ethylene-vinyl acetate copolymer having a vinyl acetate content of 30 to 60% by weight (B) and 5 to 40 parts by weight of a liquid additive (C) per 100 parts by weight of an aliphatic polyester resin (A).

2. The wrapping film according to claim 1, wherein the film has cling energy of 0.5 to 2.5 mJ as determined at 23°C.

3. The wrapping film according to claim 1 or 2, wherein the film has a pulling-out force of 5 to 100 cN when pulled out from a roll as determined at 23°C.

4. The wrapping film according to claim 1 or 2, wherein the aliphatic polyester resin (A) is a crystalline polylactic acid resin.

5. The wrapping film according to claim 1 or 2, wherein the liquid additive (C) comprises 90% by weight or more of a glycerin fatty acid ester.

6. The wrapping film according to claim 1 or 2, wherein the glycerin fatty acid ester is an acetylated monoglyceride.

7. The wrapping film according to claim 3, wherein the aliphatic polyester resin (A) is a crystalline polylactic acid resin.

8. The wrapping film according to claim 3, wherein the liquid additive (C) comprises 90% by weight or more of a glycerin fatty acid ester.

9. The wrapping film according to claim 3, wherein the glycerin fatty acid ester is an acetylated monoglyceride.
